Europäisches Patentamt

European Patent Office

Office européen des brevets

(19)

(11) Publication number: **0 026 860**
A1

(12)

# EUROPEAN PATENT APPLICATION

(21) Application number: 80105585.6

(22) Date of filing: 18.09.80

(51) Int. Cl.³: **C 01 B 33/107**

(30) Priority: 03.10.79 US 81377

(71) Applicant: **UNION CARBIDE CORPORATION, 270, Park Avenue, New York, N.Y. 10017 (US)**

(72) Inventor: **Radzilowski, Ronald Henry, 259 Glenvale Road, Youngstown, N.Y. 14174 (US)**
Inventor: **Stanley, Earl Karle, 2459 McGlew Road, Burt, N.Y. 14028 (US)**

(43) Date of publication of application: 15.04.81
**Bulletin 81/15**

(74) Representative: **Görtz; Dr. Fuchs; Dr. Harders Patentanwälte,
Schneckenhofstrasse 27 Postfach 70 03 45,
D-6000 Frankfurt/M. 70 (DE)**

(84) Designated Contracting States: **BE CH DE FR GB IT LI NL**

(54) Process for producing silicon tetrachloride and reaction mass for use in such process.

(57) Silicon tetrachloride is produced by passing chlorine gas through a packed porous mass containing silicon carbide particles and silicon metal in amounts such that about 15 to 85% by weight of the total combined silicon is silicon metal.

EP 0 026 860 A1

ACTORUM AG

- 1 -

Process for producing silicon tetrachloride and reaction
mass for use in such process.

The present invention relates to an improved process for
producing silicon tetrachloride.

Silicon tetrachloride ($SiCl_4$) is produced by passing
chlorine gas through a packed porous mass or reactor bed
containing a silicon-bearing material. The silicon-bearing material may be any one of a number of materials such
as for example silicon metal, silicon carbide, ferrosilicon (90% Si), silica plus carbon and certain metal
silicides.

In the present-day commercial production of $SiCl_4$, it is
generally preferred to employ silicon carbide as the
reactant because of its availability and low cost. However, the use of silicon carbide in this process is not
without its limitations. For instance, the reaction
between chlorine and silicon carbide forms a carbonceous
ash as a by-product which builds up and eventually clogs the pores of the reactor bed. When this happens, the chlorine gas begins to "channel" through the bed without reacting with the silicon carbide.

It has also been found that certain impurities in the silicon carbide such as calcium react with chlorine to produce calcium chloride which deposits near the top of the reactor bed and forms a crusted layer of reactant. This crust prevents further additions of the reactant (SiC) from moving down into the packed bed. The result is that the reactor must be frequently shut-down in order to remove the crust.

Crusting of the top of the SiC bed also can occur by the formation of acicular crystals of silicon which intergrow to form a relatively strong network between the SiC grains. This phenomenon happens when various silicon chlorides are formed in the reaction between chlorine and silicon carbide which subsequently decompose in the cooler parts of the reactor to form Si and $SiCl_4$.

It is also known in the art that the reaction between silicon metal and chlorine to produce silicon tetrachloride is exothermic and therefore requires adequate cooling of the reactor vessel in order to maintain the temperature of the vessel walls at or below a safe limit. So far as is presently know, silicon metal has been used only by itself as the sole reactant in the processes of the prior art.

An object of the present invention is to provide an improved process for the production of silicon tetrachloride by passing chlorine gas through a packed porous reactor bed containing silicon carbide as a reactant.

Another object of the present invention is to provide such an improved process which eliminates the problems of chlorine channeling and crust formation on top of the reaactor bed.

Still another object is to provide such an improved process which is capable for producing large yields of silicon tetrachloride.

The above and the other related objects and advantages of the present invention are attained by the addition of silicon metal to the packed porous reactor bed containing silicon carbide as a reactant. It has been surprisingly found in accordance with the present invention that the addition of silicon metal in amounts such that about 15 to 85 % by weight of the total combined silicon in the reactor bed is silicon metal, significantly greater quantities of $SiCl_4$ can be produced than are possible when silicon carbide is used alone as the reactant and without any noticeable increase in reaction temperatures.

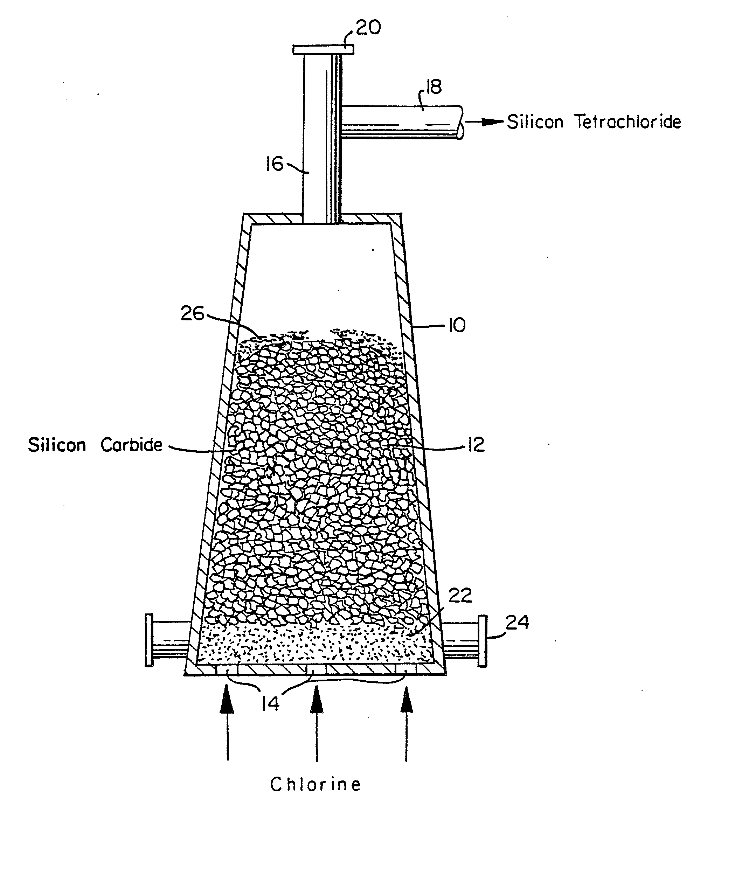

The sole figure in the accompanying drawing is a schematic elevational view of a typical packed porous bed reactor for producing silicon tetrachloride.

Referring to the drawing, the reactor includes a metal vessel 10 containing a packed porous bed 12 composed of particles of silicon carbide. Chlorine gas is passed through the porous bed 12 via a series of jet ports 14 in the bottom wall of the vessel 10. Silicon tetrachloride that is formed by reaction between the chlorine gas and silicon carbide collects within the top of the vessel 10 and is fed along with any unreacted chlorine via pipes 16, 18 to a sludge trap and product tank (not shown). Additional SiC is periodically fed into the vessel 10 through a charging port 20 on the top of pipe 16. Carbonaceous ash that is formed as a by-product of the reaction collects in a layer 22 at the bottom of the vessel 10. Vessel 10 is further provided with discharge ports 24 for removing the ash in a continuous or batch type operation.

Typically, in operation of the reactor using SiC, the pores of the packed bed 12 eventually become clogged with carbonaceous ash formed _in situ_. As a result, the chlorine gas begins to "channel" through the packed bed 12 without reacting with the SiC. Additionally, impurities that are present in the SiC such as calcium react with the chlorine gas to produce $CaCl_2$. This $CaCl_2$ is deposited near the top of the bed and eventually forms a crusted layer of reactant 26. The crusted layer 26 prevents further additions of SiC to the reactor from moving down into the packed bed and therefore operation of the reactor must be periodically stopped in order to remove the layer via the discharge ports 24.

It has been found in accordance with the present invention that the problem of chlorine gas channeling and crust formation can be effectively overcome by the addition of silicon metal in amounts such that about 15 to 85 % by weight of the total combined silicon in the reactor bed is silicon metal. Furthermore, it has been unexpectedly found that these problems are obviated by the addition of silicon metal without at the same time causing any sudden exethermic rise in reaction temperature. It is postulated that since less silicon carbide is used as a reactant, there is a significant reduction in the quantity of carbonaceous ash that is formed as a by-product and consequently there is less pore clogging in the reactor bed. Also, since less silicon carbide is employed, there are fewer impurities such as calcium introduced into the reaction and this significantly minimizes the tendency for crust formation. Crusting on top of the reactor bed by the formation of acicular crystals of silicon also is minimized by the addition of the silicon metal to the reactor bed.

It should be noted in regard to the above that if the silicon metal is added in amounts that result in less than about 15 % by weight of silicon in the reactor bed, then significant amounts of carbonaceous ash may begin to form which can clog the pores of the bed while on the other hand if the addition of silicon metal results in more than about 85 % by weight of the silicon metal, then the reaction temperature may begin to rise abruptly to the point where the vessel walls might approach or even exceed a safe temperature limit.

It should also be noted that the addition of silicon metal to the SiC reactor bed without any sudden exothermic rise in temperature makes it possible to produce greater yields of silicon tetrachloride. The reason for this result of course is that more silicon metal is available for reaction with chlorine in the reactor bed.

In the practice of the present invention, the silicon metal may be added to the silicon carbide reactant either before or while the silicon carbide is being introduced into the reaction vessel. In any event, it is extremely important that the two ingredients are uniformly blended together since otherwise any concentration of the silicon metal in the packed bed is likely to result in a hot spot in the vessel wall.

The particle size of both the silicon metal and silicon carbide materials is not too narrowly critical. It is sufficient for example to employ silicon metal in a particle size range of between about 0,0017 inch and 2 inches (corresponding range in metric units: 0,0432 mm and 50,8 mm), the lower limit being equal to about 325 mesh (M). A corresponding size distribution for the SiC particles is also preferably employed in order to obtain as uniformly mixed a reactor bed as possible.

Typically, the $SiCl_4$ reactor used in the practice of the present invention is made of mild steel and is water cooled on the outside with weirs mounted on the top. The reactor may employ either a moving or stationary porous packed bed. The reactor is approximately 1,5 m in diameter at the bottom, tapering off to about 0,9 m in diameter at the top. The height of the reactor can vary from about 1,8 to 3,0 m. The chlorine feed rate will usually vary from about 1,8 to 3,7 kg $Cl_2$ per minute.

In one example of the present invention, 127 kg of metallurgical grade silicon metal (i.e., containing up to about 1 % iron) and 400 kg of silicon carbide were fed to a $SiCl_4$ reactor of substantially the same construction described above. This initial charge was prepared by blending 18 kg of silicon metal (25,4 mm x 32 M) with 18 kg of powdered silicon carbide (i.e., less than about 6,35 mm particle size) to a bag. These were fed alternatively one bag SiC followed with one bag of the 50 % mixture. Three 41 kg bags and four 36 kg bags of SiC were fed along with seven 41 kg bags of 50 % mixture. When the reactor was back on stream, chlorine was fed at the rate of approximately 2,3 kg per minute. Thirteen hours later, the reactor was opened and charged with 163 kg SiC plus 544 kg silicon metal. Again, one bag of SiC was alternated with one bag of to 50 % mixture.

Two tests were conducted to determine the effect on the production of $SiCl_4$ of mixing silicon metal with silicon carbide to form a packed bed. In the first test, the temperature of the reactor wall was monitored at various locations to determine whether the use of silicon metal in the packed bed would significantly raise the reactor wall temperature. However, no detectable rise in temperature was found when using a mixture of 40 % silicon metal with SiC, i.e., % Si Metal = Wt. Si Metal/ (Wt. Si Metal + 0,7 Wt. SiC). It was postulated from this test that hot spots on the reactor wall would not occur so long as the silicon metal was uniformly blended with the silicon carbide.

In the second test, two similar reactors were used at the same time over a five-day period. One contained only SiC while the other contained a mixture of Si metal lump and SiC powder such that about 49 % of the total contained silicon in the bed was as silicon metal. The result of this test are shown in Table I. The five-day average yield of $SiCl_4$ from the reactor which contained on the average 49 % Si metal was 77,8 % while that from the reactor which contained 100 % SiC was 65,2 %. Both reactors were operated simultaneously in the same manner. The increase yield of $SiCl_4$ when using blends of Si metal and SiC is thought to result from (1) fewer reactor- shut-downs to break up crust on the bed, (2) reduction of $Cl_2$ channeling in the bed and (3) the larger silicon content per unit volume of the bed compared to 100 % SiC.

# T A B L E    I

## RESULTS OF TEST COMPARING THE CHLORINATION OF A BLEND OF SILICON METAL WITH SiC VERSUS 100 % SiC

Reactor No. 1     49 % Si Metal

| Consecutive Run No. | Total Si Fed / Day kg | (lb) | % Si Metal +) | Theoretical $SiCl_4$ l | (Gals.) | Actual $SiCl_4$ l | (Gals.) | Yield % |
|---|---|---|---|---|---|---|---|---|
| 4 | 552 | (1216) | 48,7 | 2247 | (593) | 1539 | (406) | 68,5 |
| 5 | 408 | ( 898) | 49,4 | 1660 | (438) | 970 | (256) | 58,5 |
| 6 | 587 | (1294) | 49,6 | 2391 | (631) | 2005 | (529) | 83,8 |
| 7 | 549 | (1210) | 49,0 | 2236 | (590) | 1906 | (503) | 85,3 |
| 8 | 511 | (1126) | 48,3 | 2081 | (549) | 1834 | (484) | 88,2 |
| Avg. | | | 49,0 $\bar{x}$ = | 10615 | (2801) $\Sigma$ = | 8254 | (2178) | 77,8 |

$$+) \quad \frac{Wt. \; Si \; Metal}{Total \; Si \; Fed \; (Wt. \; Si \; Metal + (0,7) \; Wt \; SiC)} = \% \; Si \; Metal$$

TABLE 1 (cont'd)

<div align="center">Reactor No. 2        100 % SiC</div>

| Total Si Fed / Day | | Theoretical $SiCl_4$ | | Actual $SiCl_4$ | | Yield |
|---|---|---|---|---|---|---|
| kg | (lb) | l | (Gals.) | l | (Gals.) | % |
| 534 | (1176) | 2164 | (571) | 1486 | (392) | 68,7 |
| 483 | (1064) | 1967 | (519) | 807 | (213) | 41,0 |
| 610 | (1344) | 2482 | (655) | 1652 | (436) | 66,6 |
| 559 | (1232) | 2274 | (600) | 1639 | (406) | 67,7 |
| 508 | (1120) | 2069 | (546) | 1660 | (438) | 80,2 |
| | | $\Sigma = 10956$ | (2891) | $\Sigma = 7144$ | (1885) | 65,2 |

0026860

0026860

It will be readily seen then that the present invention provides an improved process for producing silicon tetrachloride by passing chlorine gas through a packed porous reactor bed containing particles of silicon carbide and silicon metal. It will be understood that other silicon-bearing materials can be substituted either in whole or in part for the silicon metal in the process of the present invention. These silicon-bearing materials are the metallic silicides of iron, titanium, vanadium and chromium as well as silicon-based alloys containing iron, titanium, vanadium, chromium and aluminium. These silicon-bearing materials are employed in the same range of weight percents and particle sizes as mentioned hereinabove. A suitable metallic silicide for use in the practice of the present invention is ferrosilicon containing at least about 70 % by weight silicon.

## C L A I M S

1. A process for producing silicon tetrachloride comprising passing chlorine gas through a packed porous reactor bed containing particles of silicon carbide; characterized in that silicon metal is added to the packed porous silicon carbide reactor bed in amounts such that about 15 to 85 % by weight of the total combined silicon is silicon metal.

2. The process according to claim 1 characterized in that the silicon metal is provided in the form of a silicon-bearing material selected from the group consisting of the metallic silicides of iron, titanium, vanadium and chromium and the silicon-base alloys containing iron, titanium, vanadium, chromium and aluminium.

3. The process according to claim 2 characterized in that the metallic silicide is ferrosilicon containing at least about 70 % by weight silicon.

4. Process according to anyone of claims 1 to 3 characterized in that the porous reactor bed is obtained by preparing a substantially uniformly blended mixture of silicon carbide and silicon metal and compacting the mixture so as to form the packed porous reactor bed.

5. Process according to claim 4 characterized in that the particle size of the silicon carbide and silicon metal is in the range of from about 0,0432 mm to 50,8 mm.

6. A process for producing silicon tetrachloride which comprises preparing a substantially uniformly blended mixture of silicon carbide and silicon metal and compacting the mixture so as to form a packed porous reactor bed, the amount of silicon metal in the mixture being such that about 15 to 85 % by weight of the total combined silicon in the porous bed is silicon metal, passing chlorine gas through said porous reactor bed in contact with said mixture of silicon carbide and silicon metal thereby to form silicon tetrachloride and then collecting the so-formed silicon tetrachloride.

7. The process according to claim 4 characterized in that the particle size of the silicon carbide and silicon metal is in the range of from about 0,0432 mm to 50,8 mm.

8. A reaction mass for the production of silicon tetrachloride which comprises a substantially uniformly blended mixture containing particles of silicon carbide and silicon metal or a silicon-bearing material selected from the group consisting of metallic silicides of iron, titanium, vanadium or chromium and the silicon-base alloys containing iron, titanium, vanadium, chromium and aluminium as well as mixtures of silicon metal and said silicon-bearing material, the quantity of silicon metal or silicon-bearing material in said mixture being such that about 15 to 85 % by weight of the silicon is silicon metal, the particle size of the silicon carbide, silicon metal or silicon-bearing material being in the range of from about 0,0432 mm to 50,8 mm.

Silicon Tetrachloride

Silicon Carbide

Chlorine

## DOCUMENTS CONSIDERED TO BE RELEVANT

| Category | Citation of document with indication, where appropriate, of relevant passages | Relevant to claim |
|---|---|---|
| A | US - A - 3 197 283 (W.E. HAMER) -- | |
| A | US - A - 2 942 950 (T.K. PALLISTER) -- | |
| A | US - A - 2 843 458 (R.D. BEATTIE et al.) -- | |
| A | DE - A - 2 159 475 (KRONOS TITAN) -- | |
| A | DE - C - 375 713 (CONSORTIUM FÜR ELEKTROCHEM. IND.) * claim 4 * -- ---- | |

**CLASSIFICATION OF THE APPLICATION (Int. Cl.3)**

C 01 B 33/107

**TECHNICAL FIELDS SEARCHED (Int.Cl.3)**

C 01 B 33/00

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search Berlin | Date of completion of the search 02-01-1981 | Examiner KESTEN |
|---|---|---|

EPO Form 1503.1  06.78